# EUROPEAN PATENT SPECIFICATION

(11) **EP 2 431 225 B1**
(45) Date of publication and mention of the grant of the patent: **27.11.2013**
(21) Application number: 10177323.2
(22) Date of filing: 17.09.2010
(51) Int. Cl.: B62D 15/02, B60W 50/08, B60W 30/095, B60W 50/14, B60Q 9/00, B60R 21/01, B62D 1/00, B60W 30/08, B60W 10/18, B60R 25/104

(54) **Method for an automotive hazardous detection and information system**
Verfahren zur Erkennung einer Automobilgefahr und Informationssystem
Procédé de détection de risques automobiles et système d'informations

(43) Date of publication of application: 21.03.2012
(73) Proprietor: SMR Patents S.à.r.l., 1653 Luxembourg (LU)
(72) Inventor: Wagner, Daniel, 71384, Weinstadt (DE); Steffel, Hans-Clemens, 70327, Stuttgart (DE); Schäffer, Heinz-Erwin, 70806, Kornwestheim (DE)
(74) Representative: Weber-Bruls, Dorothée

(56) References cited:
- EP-A1- 2 216 222
- DE-A1- 10 244 205
- US-B1- 6 226 389

## Description

### State of the Art

The invention is related to a flexible method for hazard detection and information implemented in a vehicle with at least one side and rear area sensing device, area interpretation device and a possibility to display the information and /or warning signals for the driver.

From DE 44 10 620 A1 is known a monitoring device for the driver and or passenger side of vehicles. The monitoring device comprises a sensor in the vehicle's exterior mirror for monitoring the blind spot region. The sensor, an ultrasonic or infrared sensor, is connected to a control unit that causes a visual signal to light up in the exterior mirror in the event that an object is detected in the blind spot in order to warn the driver. Object identification or predictive interpretation of motion is not possible here.

There is a lot of prior art published related to single and stand alone solution for an assistant system in a vehicle which provides some additional benefit to driver and assist him in special actions.

The plurality of different assist systems that often uses radar or ultrasonic sensors for their purpose makes is complicated for the car manufacturer to decide which assistant system should be installed. To install different independent systems reduces the effectiveness of the assistant function and the user will be overwhelmed by information flow.

The present invention is thus intended to solve the problem of developing a flexible software for an automotive hazard detection and information system with at least one area sensing device that automatically detects present an impending hazardous situations or environmental situations for information and induces the driver at least assess the situation visually.

The problem is solved by the features of the independent claims. To this end the method of the hazard detection works with one sensor or a sensor group and is structured in modules to allow the flexible activation of modules by OEM and/or the driver. The method uses device including at least one analysis and interpretation unit per sensor or sensor group to determine geometry data and motion data of the object or objects sensed. It has at least one display unit for each sensor or sensor group.

With the aid of the sensors affixed to the outside of the vehicle here, moving traffic, etc., for example in the blind spot region to the rear of the exterior mirror or mirrors is detected. By means of an analysis and interpretation unit, the images or contours detected by the sensors provide object characterization with respect to size or type, and the image sequences provide the relative motions of the object or objects observed. From the geometry and motion data, the analysis unit calculates a possible collision or near collision, in the event that the present courses of all objects involved are maintained. In hazardous cases, the driver is warned by visual, acoustic, or tactile means and if applicable is informed and/or prompted with respect to possible reactions to avert the danger.

### Short description of invention

Further details of the invention are evident from the dependent claims and the description below of schematically illustrated example embodiments.
Fig. 1 Top view of vehicle with blind spot monitoring;
Fig. 2 Top view of vehicle;
Fig. 3 to 7 Indicator lamp at different positions;
Fig. 8 Process Steps for Object Detections;
Fig. 9 Modular Software for different Functions.

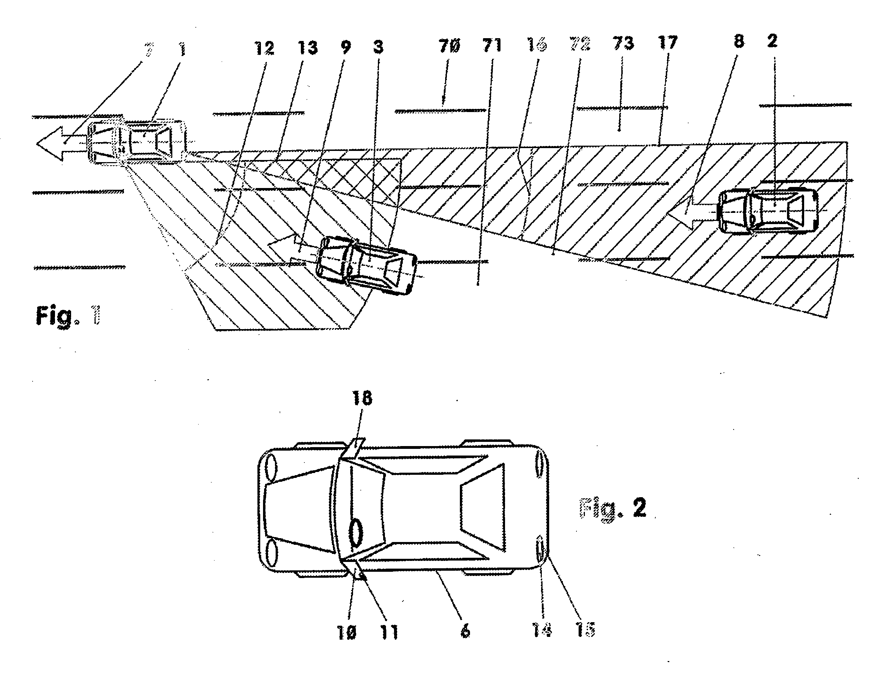

Fig. 1 shows a top view of a multi-lane road 70, for example, on which three vehicles 1, 2, 3 are driving in approximately the same direction 7, 8, 9. The first vehicle 1, the front most, has two sensors 11, 15 detecting the traffic to the rear, see also Fig. 2. The first sensor 11 is integrated in the exterior mirror 10 on the driver side, while the second sensor 15 is installed in the vehicle's rear area, e.g. in the driver-side rear light unit 14. If applicable, both exterior mirrors 10, 18 are also equipped with at least one sensor 11. Additional sensors are alternative position of the sensors is used, to achieve the optical field of view that is required.

Alternatively, the sensor 11 located in the front, viewed in the direction of travel, can be accommodated in the exterior or interior mirror, on the mirror triangle for the outside mirror, on the third side directional signal, or in the grip strip of the driver-side door handle, among other locations. If the sensor 11 is integrated in a mirror, it can be located behind the mirror glass, on the mirror housing, or in the mirror base.

The mirror triangle is a region of the outer vehicle shell. It is generally part of the driver-side or passenger-side door and is located between the doorpost near the A-pillar and the door-side window. The mirror triangle carries and positions the exterior mirror on the driver or passenger door and will carry in future a camera module only to replace a rear view mirror.

As an alternative to placement in the rear light unit 14, the rear sensor 15 can be positioned, for example, in the rear bumper, in the region of the tailgate handle, in the centre auxiliary brake light, in the license plate light, or in a passenger compartment vent integrated in the C-pillar or D-pillar. Within the rear light unit 14, the sensor can be placed in the back-up light, in the turn signal light, in the taillight, in the rear fog light, or in the rear brake light.

The sensors 11, 15 can be digital cameras, range-finding cameras, laser systems or radar systems, for example. Motion sensors and other range measurement systems are also possible. Different sensor types can also be combined in a sensor group. Probably the sensor is an optical sensor that can be combined with other sensor types in a sensor group.

The front sensor 11 has an angle of view of approximately 60 to 80 degrees, with the line delimiting the field of view 13 nearest the vehicle extending along the outer contour of the vehicle body 6; in other words, this delimiting line 13 extends parallel to the direction of travel, for example. The detection and/or analysis range is 10 to 60 meters, for example.

The angle of view of the rear sensor 15 covers approximately 15 to 50 degrees, for example. The detection and/or analysis range extends to 30 to 40 meters.

The optical sensor uses a wide angle optic, preferably a fish- eye optical lens that extend the angle ranges to a much higher extend than discussed above. The wide range view allows a better coverage of areas adjacent to the vehicle and increases the functions that can be implemented using the wide angle data set.

The purpose of the sensors 11, 15 is to sense the surroundings. They are meant to detect objects in motion, for example driving objects 2, 3, which move relative to the vehicle 1 in such a way that a later collision cannot be ruled out if the driver of vehicle 1 does not react by changing the direction of travel 7 or the speed. Through appropriate processing of the sensor data, the direction of motion, speed, and changes therein, are continuously calculated in an interpretation unit and compared with the comparable data for the vehicle 1. From these data are calculated a possible collision point or an encounter that is still collision-free but closer than a minimum distance. Both possibilities are interpreted as a hazardous situation.

Driver reaction assistance is derived from this. From the fact that vehicle direction 7 and speed are maintained, or from a change in one or both that increases a risk of collision, the hazard detection system interprets that the driver of 1 does not perceive the approaching object 2, 3 in the exterior mirror blind spot. In a first phase, the system forces the drive to look in the exterior mirror 10 by means of a lighted or blinking visual signal on or in the vicinity of the exterior mirror 10. Generally, the driver of 1, continuing not to perceive a hazard, will look back over his shoulder on the side facing the appropriate exterior mirror 10, notice the vehicle 2, 3 to the rear, and react appropriately to avert a danger.

Nearly any type of acoustic warning can assist the driver of 1 in this situation.

If the driver of 1 continues to evidence no reaction, in a second phase his attention is drawn to an imminent hazardous situation. In this embodiment the steering wheel and/or the brake or gas pedal serves as an information device. To this end, the steering wheel and/or the relevant pedal is set into a pulsing motion. As a rule, this pulsing motion has no direct effect on steering action or vehicle acceleration. Independently of this, if desired, the brake pressure is increased, for example, in order to shorten the braking response time.

Moreover, it is also possible for the system to activate the hot-air fan at a certain difference between the inside and outside temperatures and/or at or above a certain air humidity level in the interior air, and, by means of the ventilation grille 26, dry the side window, at least in the area of the exterior mirror, in order to improve visibility of the exterior mirror. Active adjustment of the ventilation louvers for optimal hot-air conduction is also possible.

The pulsing or vibrating motion of the steering wheel or at least one of the pedals makes the driver of 1, who has physical contact with at least the accelerator or steering wheel, expressly aware of a general or specific hazardous situation. For example, the vibration of the steering wheel can prepare him through tactile means for the need to avert the hazardous situation by turning the steering wheel. In addition or alternatively, in the case of a hazardous situation that turning the steering wheel would avert, the driver's seat can be palpably tilted in the direction in which the driver should steer. If desired, the seat and/or backrest can also vibrate in the process. In addition, instead of tilting of the seat--for example if it is necessary to steer toward the right--the left side of the driver's buttocks could be raised or the right side could be lowered. The palpable unilateral or alternating lifting can be in the range of millimetres.

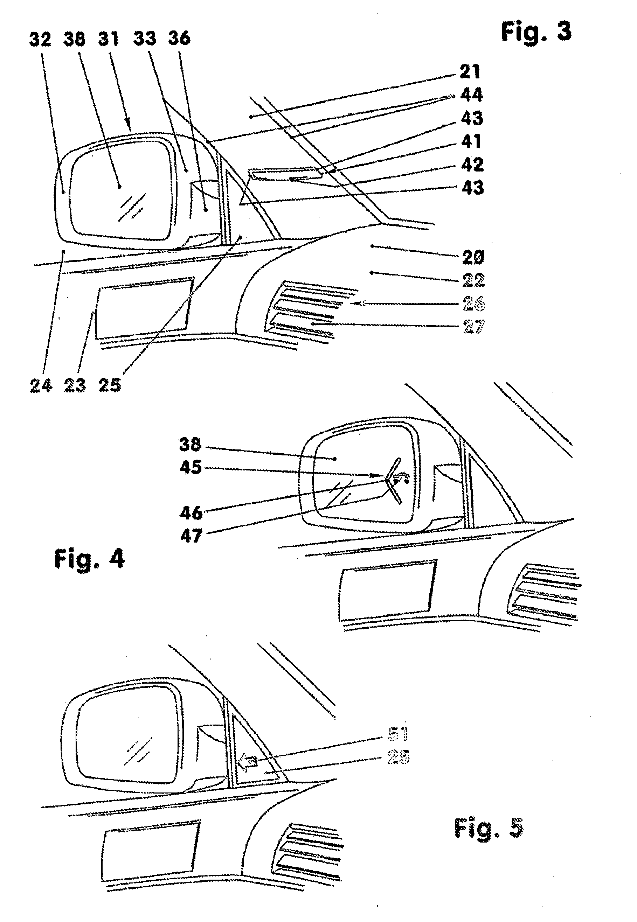

The visual signal from the first warning phase is emitted by a light source in the form of an indicator lamp 41-61. Such lamps are shown in Figs. 3 through 7.

In addition, Figs. 3-7 show the inside left corner of the passenger compartment 20. Visible is a part of the left-hand driver-side door 23, the part of the dashboard 22 located to the left of the steering wheel, the A-pillar 21, and an exterior mirror 30 located on a mirror triangle 25. Said mirror can be the exterior mirror 10 or 18--shown in Figs. 1 and 2--as suitable for a vehicle for driving on the left or the right.

In Fig. 3, a recess 42 is located in the interior panelling of the A-pillar 21; arranged in this recess is a blind spot lamp 41. The recess 42 extends, for example, primarily horizontally across the A-pillar panelling. The length of the lamp 41, measured horizontally, corresponds in this example to approximately 60% to 80% of the width of the A-pillar panelling at that location. The height of the, e.g., rhombus-shaped recess is approximately 10 millimetres, for example. The side borders 43 of the recess 42 or of the blind spot lamp 41 extend parallel to the nearest edges 44 of the A-pillar panelling, for example. The visible outside edge of the warning lamp 41 fitted into the recess is matched to the spatial curvature of the A-pillar panelling. In addition, the warning lamp 41 is domed slightly toward the passenger compartment 20 so that its centre region projects slightly beyond the spatial curvature of the A-pillar panelling. The lamp lens of the blind spot lamp 41 has a red warning colour, for example, similar to that of the emergency flasher button. If desired, the lamp lens in the inactivated state is the same colour as the A-pillar panelling. Depending on the type of panelling, the lighting means, for example a light bulb or a light-emitting diode, can shine through the A-pillar panelling when activated.

In vehicles without A-pillar panelling, the blind spot lamp 41 sits directly in a recess worked in the hollow profile of the A-pillar 21.

Fig. 4 shows a blind spot lamp 45, which is integrated in the mirror glass 38 or located behind the partially at least semi-transparent mirror glass 38 in the mirror housing 31. Upon activation of the warning lamp 45, a stylized arrow 46 and a vehicle symbol 47 light up. The arrow 46 comprises two legs of equal length and equal width. The vertical height of the arrow 46 represents approximately 30% to 50% of the vertical extent of the mirror glass. The height of the triangle enclosed by the legs of the arrow is approximately 20% to 30% of the aforementioned extent of the arrow. The short height gives the driver the spatial impression that the arrow 46 is pointing into the blind spot region of the exterior mirror 30 as a warning. The vehicle symbol 47 between the arrow 46 and the edge of the mirror near the vehicle body consists of a bar with multiple bends and two rings beneath it. The bar represents the upper edge of an automobile silhouette in simplified form, while the two rings symbolize the vehicle wheels.

In Fig. 5, a blind spot lamp 51 in the shape of an arrow lamp pointing backward, which is to say opposite the direction of travel, is located in the mirror triangle 25. The length of the arrow 51 is, e.g., approximately 40-60% of the length of the mirror triangle measured in the direction of travel. The arrow height is approximately equal to the arrow length. The lamp lens of the arrow 51 projects approximately 1 to 2 millimetres beyond the surrounding surface of the mirror triangle 25, for example. With respect to the colour, please refer to the description of Figs. 3 and/or 4.

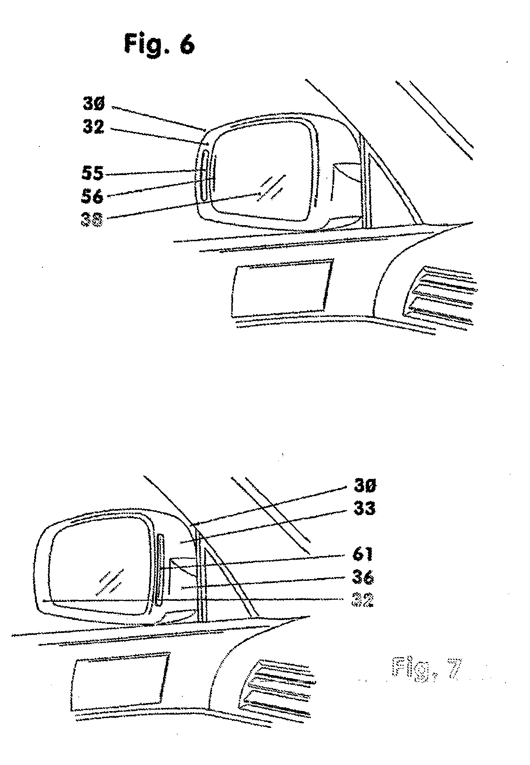

In Figs. 6 and 7, the blind spot lamps 55 and 61 are likewise affixed outside the passenger compartment to the exterior mirror 30. Both warning lamps 55, 61 are oriented largely vertically in the mirror housing 31 in suitable recesses. Their length, measured in the vertical direction, is 5 to 10 times longer, for example, than their visible width.

As shown in Fig. 6, the warning lamp 55 is seated in the--for example--vertical section of the inner frame 32 of the mirror located farthest from the passenger compartment. The light from the activated warning lamp 55 is thus also reflected in the mirror glass 38, more strongly encouraging the driver to look in the exterior mirror 30.

[The warning lamp 61 shown in Fig. 7 is located in the housing outer surface 33 of the mirror 30, facing the driver, between the housing inner frame 32 and the mirror-housing-side attachment of the mirror base 36.

The luminous intensity of the warning lamps 41-61 is adapted to the ambient brightness if desired, i.e. the brighter the environment, the more intensely the warning lamp 41-61 glows. The lamp lens material can be a transparent plastic, glass, or a comparable material. If desired, the lamp lens is simultaneously the body of the light source, e.g. the bulb of the incandescent lamp or the housing of an LED or LED array.

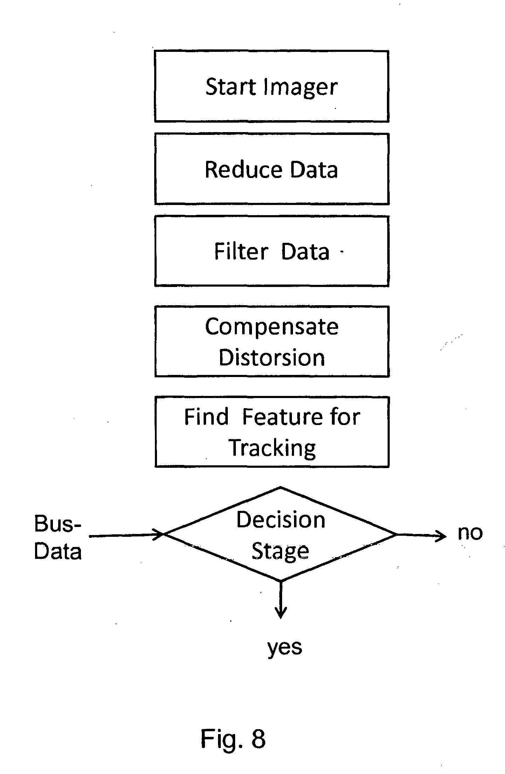

Fig 8 describes the schematic process running by software on a controller linked to the optical image sensor. The image senor is started and begins to sample data with a working frame rate. Frame rates of up to 30 frames per second are actually discussed and could be basis of data conversions and date extractions. In the next step seize of data is reduced to a level that allows the processing of the data in a controller in real time. In the next step the data are processed and filter with algorithm to produce a reliable data set. The data that are sampled via a fish eye lensor another wide angle lens are distort and must be recalculated to get a rectangular image that can be use for further purposes.

The step to find features for tracking is different for night or day use. In darkness the objects can be tracked by their headlamps, so that a vehicle or a motor bike can be detected and the vector of motion tracked. The software is able to distinguish between one or two headlamps and includes a plausibility check. For example it is checked whether the detected headlamps are not higher than a threshold height over street level so that no other artefacts are tracked in night. A street lamp that is detected would be rejected by the software because of the height over ground level.

In the day mode the step of finding features in the image is different. The applied algorithm uses the vanishing points of structures in the image to define objects and their position in the three dimensions. The objects detected are qualified into danger categories .In the decision stage software decides about a warning signal yes or no, to be presented to vehicle's driver. Basis for the warning is use of object classification and a decision tree that allows to limit warning to only hazardous situation. The bus- data input on this stage provides vehicle parameters that can be involved in the warning decision, as velocity, steering angle, setting of turn signal indicator etc.

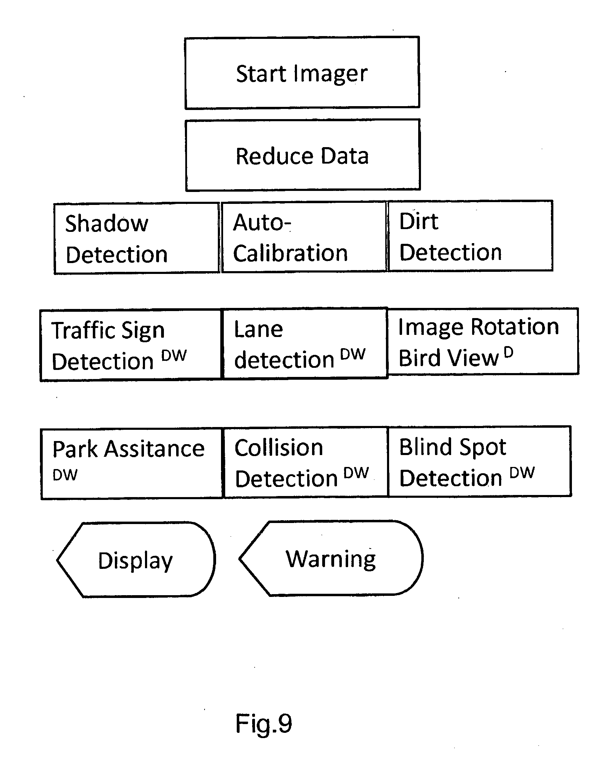

Fig.9 shows a schematic block diagram with software modules that are all linked to the sensor and includes different functionalities.

A software module is a small self-contained program that carries out a clearly defined task and is intended to operate within a larger program suite.

The abbreviations D and W explain whether the output of a software module is used to be displayed in form of an image on a display or used for a warning indication or for both.

After the step of data reduction the same data set is used as parallel input for all blocks representing software modules of Figure 9.

Auto calibration is a software module that allows the calibration of field of view independent from the installation and the mounting of the optical sensor in the production line.

The software for hazard detection and information system is self-adjusting. It is important to adjust the area of detection of a hazard detection system to achieve a reliable warning situation. For the software is analysing images and deriving the hazardous status from the detected objects the view of the optical sensor must be defined. The very sensitive function of a warning system is sensible to the final optical view of the optical sensor. During normal vehicle mounting the view of a sensor can change slightly. In prior art the view of the camera sensor must be amended after the rear view mirror is attached to the vehicle or the senor is mounted somewhere else at the vehicle to tune the warning system. In details the position of the sensor must be adapted using defined target lines in the production line and amending the position. This increases the cost of installation of the assistant system. According to the invention the software recalculates the actual position and adapt the field of view to an optimum to initiate the hazardous warning system.

The software module auto calibration is also used to adapt the field of view if the vehicle carries a big load and the position of the cameras sensor changes. The software uses vanishing points of detected features of the image that are calculated to define the view angles versus the vehicle coordinates.

This flexibility is possible because an optical sensor with a wide angle optic has a very broad view and the field of view is shifted by software over the total range of the image recorded.

Another software module is able to detect dirt or fogging on the optical lens.

If both a right-side and left-side sensors are used, both software modules can work together or can be independent of one another. Differences arising here can also be analyzed. This is a big advantage using optical sensor systems. The optical sensors are able to compare data to detect for example any distortion that covers one of the optical lenses. The optical sensors are in some cases hidden by dust or a water droplet. These distortions arise failures in object detection. By comparing the situation on both sides of the vehicle these issues are solved. The software compensates a distortion on a lens and the object detection can successfully detect a hazardous situation again.

Either auto calibration or dirt detection are modules that in background parallel to further software modules.

Another background running module is the shadow detection. This software module derives data that shows light and dark regions in the image data that are correlated to the own vehicle, The shadow detection is important to avoid mis-warnings that occurs from the light-dark - transition and the features that are track in the image therefore.

Blind sport detection module is a function as discussed for Fig. 8. Here the object detection in field of view that should be followed is the key software element. The field of view can be rearwardly or forwardly or sidewardly from the vehicle, dependant on which type of blind spot area is looked.

Another software module is detecting traffic sign, which is comparable with other object detections. Also lane sign detection is done in a further software module. The lane detection is then used for two different further software module , the lane departure warning which implements a forward looking view of the optical sensor and and the lane change control.

The data of the optical sensor are further used to rotate and recalculate the image pixel by pixel. These results in an image which give the bird view sight of the vehicle's surrounding. Another software module used the image for a park assistant function that can be combined with Bird's View function.

A software module for collision control and warning is also available.

The hazard detection system can be designed as a complete module that requires only few vehicle data. The system is realized with a controller connected via a bus system with the vehicle. The controller is either able to calculate all the functions of the software for example the object recognition issues or is connected to another controller that is specially adapted for video calculations in real time. Data exchange with the vehicle can take place over a LIN bus or CAN bus, for example. For adaptation to the standard bus systems the controller includes the LIN- or CAN bus functionality that allows the communication with a master controller in the vehicle. The module consisting of sensor, optic, electrical circuit and at least one controller can be placed directly on or in the rear view mirror housing or elsewhere at the vehicle. The position of the optical sensor is only limited by the field of view and by shading of this field of view by vehicle. Thus it can be permanently attached and also ensure good thermal transfer to the vehicle body. The hazard detection system with a standard controller connected to the vehicle bus system is also adapted to control more than the optical sensor data. The control of further data of devices that are mounted or attached to a rear view mirror is realized. One example is the control of a turn signal indicator.

The software of hazard detection and information system can also be used for the traffic space in front of the vehicle. If desired, the monitoring of the traffic space in front of the vehicle and behind the vehicle can be integrated in one module. Then, for example, pedestrians, traffic signs, special-purpose vehicles such as police, fire trucks, etc., can also be detected with the aid of the optical sensors and operated by the relevant software module.

The warning indication is provided by means of a lamp arranged on the edge of the driver's field of view. The warning then takes the form of flashing of the light, for example. The lamp, for example a light-emitting diode, can be directed at the driver.

The software of hazard detection and information system includes a brightness detection device. Thus it can switch over from a day mode to a night mode, possibly coupled to the onboard clock, and use the appropriate software program based on the mode. Normally the day and night situation is derived from the received data of the optical sensor.

Also, in the event of, e.g., mis-adjustment of the sensors, a warning message can be issued or the software can automatically adjust itself or compensate for a mis-adjustment. It is likewise possible for, e.g., the size and direction of the monitored region to be adjustable or settable by the driver, for example by means of an operating display.

The type of warning message and if applicable the control signal issued by the hazard detection system can be governed by the severity of the danger. For example, they can be dependent on the travel speed of the monitoring vehicle, the travel speed of the monitored vehicle in the hazard zone, the radius of turn, etc.

The sensors 11, 15 can--as already mentioned--include an ordinary commercial camera and ordinary commercial optical lenses. These components are arranged directly behind a window in a housing that forms a module in or at the rear view mirror housing. The electrical components are then designed specifically for the hazard detection and information system. Close to the camera or optical sensor chip an image processing unit is placed to receive data from the sensor and start calculations. The image processor unit is linked to a processor or controller that analyses and interprets the data for further use. All software is either stored in related storages of the units or controller either on one device or spread over several devices.

The individual camera has a field of view of more than to 60 degrees using a wide angle lens. The lenses can have a hydrophilic or hydrophobic coating that is applied as a permanent coating, or is renewed during cleaning.

The module can also be arranged in an area of the door that is subjected to moisture. The module can then be designed with IP 67 protection. In this context, the wiring is in the sealed area. Large-volume, sealed connectors can be eliminated. The lens and the CMOS electronics are then glued into the housing.

The thermal expansions of the different device parts are compensated with a Gore Tex.RTM. seal. This achieves, firstly, water tightness preventing the entry of moisture, and secondly prevents the build-up of an overpressure of air in the housing.

The software of the hazard detection system can be customer-specific. It can be programmed by the driver or the service shop, for example. It can be used for other applications in the vehicle in addition to the hazard detection system. For example, an interface to the data network of the vehicle can be provided. Thus, for example, the settings of the sensors 11, 15 can automatically be compensated depending on the loading of the vehicle 1. In addition, various operating states or driver-specific settings can be pre-programmed, for example based on the driver's specific field of view. In this regard, for example, it is possible to consider the seat position of the driver, the individual visual acuity of the driver, the reaction time of the driver, etc.

Modular software structure comprises the possibility to create software adaptable to driver's need or to the actual parameters. A system with optical sensors can be used for several functions, blind spot detection rearwardly, blind spot detection forwardly, lane change detection and assistant, parking assistant, bird's view application, surrounding monitoring. There are additional modules for traffic sign recognition, and for other assistant functions. The module auto calibration and the module dirt detection are always active.

According the acquired package software is activated. The user of a vehicle equipped with this software is able to receive updates of the functionality of the hazardous warning system or to have additional functions installed. In order to protect the sensors 11, 15, they can be equipped with an electromechanically operated cover that is closed when the vehicle 1 is stopped. A cleaning mechanism for the lens, for example a wiper, spray nozzles, etc. is also possible.

The speed of the object 2, 3 relative to that of the vehicle 1 bearing the system may be minimal. Thus even if two vehicles travelling at approximately the same speed should approach one another during a lane change, this can be detected. Conversely, even stopped vehicles can be detected.

The hazard detection system can also warn if there is and/or will be reduced visibility. This can be caused by, e.g., a dirty lens, fog, etc. To this end, the hazard detection system has infrared sensors in addition to sensors 11, 15 that detect objects 2, 3 in the visible spectrum. These cited functions can also be combined in a single sensor 11, 15. The use of a night vision device in the hazard detection system or in combination therewith is also possible.

The CMOS electronics of the signal generator produces a black-and-white image.. The image produced can thus have a high pixel density. The invention is not limited to a black and white optical sensor. Colour sensors are used if the image is displayed to give a real view of surrounding.

The visual warning signal in the mirror triangle 25, for example the blind spot lamp 51 designed in the shape of an arrow, is designed such that it elicits a glance at the mirror 10, 18. The warning signal alone thus does not provide complete information about the hazard and does not replace a look in the mirror 10, 18.

The hazard detection system can perform self-diagnostics with regard to its function. Thus, it can regularly receive signals and report back over the data connection line from the vehicle 1. A special diagnostics interface is also possible.

The units can be used equally well for driving on the right or left.

The hazard detection system can monitor and recognize multiple vehicles 2, 3 simultaneously, and warn of possible hazards caused by these vehicles 2, 3. In this regard, for example, a closer vehicle 3 can be assessed as the primary danger and a vehicle 2 that is further away as a lesser danger.

The individual mirror 10, 18 can be attached by its base surface. In this way, it can be largely insensitive to vibrations, shocks, etc. In addition, the sensors 11, 15 can then be integrated in the base plate, for example. Adjustment of the mirror 10, 18 then does not affect the position of the sensors 11, 15. The sensors 11, 15 are then adjusted by means of an adjusting screw on the outside of the mirror 10, 18.

If the sensors are mounted in the pivotable part of the rear view mirror the view of the sensor can be adapted by the software. The software defines the area of view actually and calculated the hazardous situations according the actual views.

The sensors 11, 15 can also be arranged in such locations as on the roof, in the doors, in the rear window, in the trunk lid, etc. Thus the detection regions 12, 16 can have a large overlap.

The hazard detection system can be used in the customary temperature range. Thus, even low temperatures and windows that are partly iced up, do not cause the hazard detection system to fail. In order to minimize the effects of extremely high or extremely low temperatures, the hazard detection system can also have protection against heat and/or cold, a heater, a fan, and/or a defroster for the lens. The individual components of the hazard detection system can also be electrically shielded. In this way, electrical influences on the hazard detection system by other vehicle components or electric and/or magnetic fields in the surroundings of the vehicle I can be prevented. In addition, the hazard detection system does not electrically and/or magnetically affect any other vehicle components or the environment.

The components of the hazard detection system can be arranged in a housing that is protected against unauthorized access. Thus, for example, it can be sealed or it can be closed with special screws. The housing can be made of die-cast aluminium with an anodic coating as corrosion-proofing, for example. A hermetic sealed housing helps to protect electrical devices including controller from dust and humidity. The sealed module is also resistant against electromagnetic pulses and does not sent electromagnetic distortion pulses.

If a camera is used as a sensor 11, 15, the camera can include an auto focus. The optics of the camera are then set such that objects in the more remote environment do not affect the sensors 11, 15. The brightness information of the image recorded by the camera can be used to adjust the brightness of the warning lamp 41-61. The warning lamps 41-61 are arranged such that the driver can see them without turning his head, for instance.

In order to install the hazard detection system in a motor vehicle, the standard mirror can be replaced by a mirror 10, 18 that includes components of the hazard detection system.

The images detected by the sensors 11, 15 and the information determined there from can be stored inside the vehicle 1, for example together with the operating parameters of the vehicle. In this way, an accident can be reconstructed after the fact. The data can also be transmitted to a removable storage medium. Even wireless transmission is possible, either in real time or at regular time intervals. The data can also already be compressed and processed at this point.

At least one of the sensors 11, 15 can also be arranged on a vehicle that is not self-propelled, such as a trailer, a semi trailer, etc. The towed vehicle is then connected to the data bus of the towing vehicle, if desired even over a wireless connection.

In the event of trailer operation, the hazard detection system can also sense yawing of the trailer, for example, before the trailer jack-knifes relative to the towing vehicle.

Method of hazard detection and information system includes other systems assisting the driver, such as assistive braking, assistive lane changing, etc. In this regard, software can be adapted to the course of travel. For instance, if the assistive lane changing system detects a lane change, software can monitor the danger zone accordingly. Also, the image from one or more cameras of the assistive lane changing system can be projected on the windshield together with the image from one or more cameras of the system. Then a complete image of the traffic space to the rear is presented on the head-up display. If desired, the mirrors 10, 18 can be omitted entirely in this case. In this context, the software has an interface with the internal data bus by three wires and is connected to the head-up display by a two-wire line.

In hazard situations and on the highway, software system can supply data in order to influence, at least the steering of the vehicle.

The hardware of the system can also contain additional components, such as curb lights, mirror elements with controlled dimming and/or tint, heaters, etc that are directly of via bus system connected to the software The data transmission and the control here can be accomplished through glass fibres, wireless transmission, etc. In addition one module of the software includes an access control system with thermal profile monitoring for keyless access to the vehicle.

The sensors 11, 15 can be arranged separately from the analysis unit. The sensors 11, 15 can be placed at the top or bottom of the mirror 10, 18. They are then connected to the analysis unit, which is located in the door, in the frame, on the inside of the door, the mirror triangle 25, etc.

It is possible to deactivate the software of hazard detection and information system complete or only per modules.. Thus the blind spot warning module can be switched off for parking, to enter a garage, in traffic jams, in heavy traffic, etc. but the parking assistant still runs. Switch-on and switch-off can be done automatically or by the driver.

## Claims

1. Method of an automotive hazard detection and information system for vehicles running on at least one controller, wherein data of at least one optical sensor or a sensor group (15,11) including an optical sensor are used, and at least one analysis and interpretation unit per sensor or sensor group to determine geometry data and motion data of vehicle equipped with the software and/or of objects that arise hazardous situation and/or information requiring situation in the surrounding of the vehicle is comprised, the analysed data for at least one display unit and /or warning indicator for each sensor or sensor group is provided; wherein the method is done by software modules for different detection and information functions that use the same optical sensor data parallel for analysing and providing the different functions and that at least two modules are activated the same time, **characterized in that** at least a module dirt detection or a module auto calibration is running with another software module in parallel.

2. Method of an automotive hazard detection and information system according to claim 1, wherein the modules that are implemented in the software are activated in the vehicle according user's requirements.

3. Method of an automotive hazard detection and information system according to claim 1, wherein the modules are coming out of a group of: blind spot detection, bird view, side view assistant, rear view assistant, front view assistant, rear driving control, lane change assistant, lane departure control, parking assistant, approaching control, traffic sign detection, collision control, auto calibration, dirt detection, shadow detection, image rotation, shadow detection, traffic sign detection, night vision.

4. Method of an automotive hazard detection and information system according to claim 3, wherein the module shadow detection runs parallel to other modules in day mode.

5. Method of an automotive hazard detection and information system according to claim 1, wherein the field of view of the at least one optical sensor is adapted automatically after mounting the optical sensor at vehicle or after loading vehicle, by using auto calibration function module of the software using vanishing point detection to adapt field of view.

6. Method of an automotive hazard detection and information system according to claim 3, wherein the software uses the direction of motion, the speed of motion, and changes therein, and the motion data of the object or objects detected, to calculate a possible collision between the vehicle and at least one object.

7. Method of an automotive hazard detection and information system according to claim 1, wherein two sensors or sensor groups are used and the software is able to detect distortions on the optical lens by comparing sensor data of at least two optical sensors.

8. Method of an automotive hazard detection and information system according to claim 6 and 7, wherein the software is adapted to detect a hazardous situation by an object recalculating the data of the sensor after detecting a distortion on the optical lens.

9. Method of an automotive hazard detection and information system according to claim 3, wherein the software for image rotation recalculates data of at least one sensor or sensor group that are displayed as a bird's view image.

10. Method of an automotive hazard detection and information system according to claim 1, wherein the software starts an indication to the driver, wherein the indication is an optical or an acoustical or a tactile signal.

11. Method of an automotive hazard detection and information system according to claim 1 that includes at least one interface to the vehicle internal bus system.

12. Method for an automotive hazard detection and information system according to claim 11 wherein the software influences vehicle parameters via the bus system.

## Patentansprüche

1. Verfahren eines Automobilgefahrenerkennungs- und -informationssystems für Fahrzeuge, das auf mindestens einem Steuergerät läuft, wobei Daten mindestens eines optischen Sensors oder einer Sensorgruppe (15, 11), die einen optischen Sensor umfasst, verwendet werden, und mindestens eine Analyse- und Interpretationseinheit pro Sensor oder Sensorgruppe zur Bestimmung von Geometriedaten und Bewegungsdaten eines mit der Software ausgerüsteten Fahrzeugs und/oder von Objekten, die eine Gefahrensituation und/oder informationsbedürftige Situation in der Fahrzeugumgebung entstehen lassen, umfasst ist, die analysierten Daten für mindestens eine Anzeigeeinheit und/oder Warnanzeigevorrichtung für jeden Sensor oder jede Sensorgruppe bereitgestellt werden, wobei das Verfahren durchgeführt wird durch Software-Module für unterschiedliche Erkennungs- und Informationsfunktionen, die dieselben optischen Sensordaten parallel für die Analyse und die Bereitstellung der unterschiedlichen Funktionen verwenden, und wobei mindestens zwei Module gleichzeitig aktiviert werden, **dadurch gekennzeichnet, dass** mindestens ein Schmutzerkennungsmodul oder ein Selbstkalibrierungsmodul parallel zu einem anderen Software-Modul läuft.

2. Verfahren eines Automobilgefahrenerkennungs- und -informationssystems nach Anspruch 1, **dadurch gekennzeichnet, dass** die Module, die in der Software implementiert werden, in dem Fahrzeug entsprechend Bedürfnissen des Benutzers aktiviert werden.

3. Verfahren eines Automobilgefahrenerkennungs- und -informationssystems nach Anspruch 1, **dadurch gekennzeichnet, dass** die Module zu folgender Gruppe gehören: Totwinkelerkennung, Vogelperspektive, Seitenblickassistent, Rückblickassistent, Vorausblickassistent, Rückfahrkontrolle, Spurwechselassistent, Spurhalteregelung, Einparkassistent, Annäherungskontrolle, Verkehrszeichenerkennung, Kollisionskontrolle, Selbstkalibrierung, Schmutzerkennung, Schattenerkennung, Bilddrehung, Schattenerkennung, Verkehrszeichenerkennung, Nachtsicht.

4. Verfahren eines Automobilgefahrenerkennungs- und -informationssystems nach Anspruch 3, **dadurch gekennzeichnet, dass** das Schattenerkennungsmodul parallel zu anderen Modulen im Tagesmodus läuft.

5. Verfahren eines Automobilgefahrenerkennungs- und -informationssystems nach Anspruch 1, **dadurch gekennzeichnet, dass** das Sehfeld des mindestens einen optischen Sensors nach der Montage des optischen Sensors am Fahrzeug oder nach dem Beladen des Fahrzeugs unter Verwendung des Selbstkalibrierungsfunktionsmoduls der Software, die das Sehfeld mittels Fluchtpunkterkennung anpasst, automatisch angepasst wird.

6. Verfahren eines Automobilgefahrenerkennungs- und -informationssystems nach Anspruch 3, **dadurch gekennzeichnet, dass** die Software die Bewegungsrichtung, die Bewegungsgeschwindigkeit und Veränderungen der beiden und die Bewegungsdaten des erkannten Objekts oder der erkannten Objekte dazu verwendet, eine mögliche Kollision zwischen dem Fahrzeug und mindestens einem Objekt zu berechnen.

7. Verfahren eines Automobilgefahrenerkennungs- und -informationssystems nach Anspruch 1, **dadurch gekennzeichnet, dass** zwei Sensoren oder Sensorgruppen verwendet werden und die Software in der Lage ist, durch Vergleichen von Sensordaten von mindestens zwei optischen Sensoren Formänderungen auf der optischen Linse zu erkennen.

8. Verfahren eines Automobilgefahrenerkennungs- und -informationssystems nach Anspruch 6 und 7, **dadurch gekennzeichnet, dass** die Software so angepasst ist, dass sie eine durch ein Objekt verursachte Gefahrensituation erkennt, indem sie die Daten des Sensors nach der Erkennung einer Formänderungen auf der optischen Linse neu berechnet.

9. Verfahren eines Automobilgefahrenerkennungs- und -informationssystems nach Anspruch 3, **dadurch gekennzeichnet, dass** die Software für die Bilddrehung Daten mindestens eines Sensors oder einer Sensorgruppe, die als Bild aus der Vogelperspektive angezeigt werden, neu berechnet.

10. Verfahren eines Automobilgefahrenerkennungs- und -informationssystems nach Anspruch 1, **dadurch gekennzeichnet, dass** die Software einen Hinweis an den Fahrer startet, wobei der Hinweis ein optisches oder ein akustisches oder ein taktiles Signal ist.

11. Verfahren eines Automobilgefahrenerkennungs- und -informationssystems nach Anspruch 1, das mindestens eine Schnittstelle zu dem internen Bussystem des Fahrzeugs einschließt.

12. Verfahren für ein Automobilgefahrenerkennungs- und -informationssystem nach Anspruch 11, **dadurch gekennzeichnet, dass** die Software über das Bussystem Fahrzeugparameter beeinflusst.

## Revendications

1. Procédé pour système de détection et d'information d'un risque automobile pour des véhicules circulant sur au moins un dispositif de commande, dans lequel des données d'au moins un capteur optique ou d'un groupe de capteurs (15, 11) comprenant un capteur optique sont utilisées, et au moins une unité d'analyse et d'interprétation par capteur ou groupe de capteurs est comprise pour déterminer des données géométriques et des données de déplacement du véhicule équipé du logiciel et/ou d'objets, qui surviennent dans une situation dangereuse et/ou une situation nécessitant une information dans l'environnement du véhicule, les données analysées d'au moins une unité d'affichage et/ou un indicateur d'alarme pour chaque capteur ou groupe de capteurs sont fournies ; dans lequel le procédé est exécuté par des modules logiciels pour différentes fonctions d'information et de détection qui utilisent les mêmes données parallèles de capteur optique pour l'analyse et la fourniture des différentes fonctions et en ce qu'au moins deux modules sont activés en même temps, **caractérisé en ce qu'**au moins un module de détection de poussière ou un module d'auto calibrage fonctionnent en parallèle avec un autre module logiciel.

2. Procédé pour système de détection et d'information d'un risque automobile selon la revendication 1, dans lequel les modules qui sont mis en oeuvre dans le logiciel sont activés dans le véhicule conformément aux demandes de l'utilisateur.

3. Procédé pour système de détection et d'information d'un risque automobile selon la revendication 1, dans lequel les modules proviennent d'un groupe constitué de : une détection de point aveugle, une vue à vol d'oiseau, un assistant de vue latérale, un assistant de vue arrière, un assistant de vue avant, une commande d'entraînement arrière, un assistant de changement de voie, une commande de sortie de voie, un assistant de stationnement, une commande d'approche, une détection de signes de trafic, une commande de collision, un auto calibrage, une direction de poussière, une détection d'ombre, une rotation d'image, une détection d'ombre, une détection de signes de trafic, une vision de nuit.

4. Procédé pour système de détection et d'information d'un risque automobile selon la revendication 3, dans lequel le module de détection d'ombre fonctionne parallèlement à d'autres modules en mode jour.

5. Procédé pour système de détection et d'information d'un risque automobile selon la revendication 1, dans lequel le champ de vision du au moins un capteur optique est adapté automatiquement après montage du capteur optique sur le véhicule ou après chargement du véhicule, en utilisant un module de fonction d'auto calibrage du logiciel utilisant une détection de point de fuite pour adapter le champ de vision.

6. Procédé pour système de détection et d'information d'un risque automobile selon la revendication 3, dans lequel le logiciel utilise la direction de déplacement, la vitesse de déplacement, et des changements dans celles-ci, et les données de déplacement de l'objet ou des objets détectés, pour calculer une collision possible entre le véhicule et au moins un objet.

7. Procédé pour système de détection et d'information d'un risque automobile selon la revendication 1, dans lequel de capteur ou les groupes de capteurs sont utilisés et le logiciel est capable de détecter des déformations de la lentille optique en comparant des données de capteur d'au moins deux capteurs optiques.

8. Procédé pour système de détection et d'information d'un risque automobile selon les revendications 6 et 7, dans lequel le logiciel est adapté pour détecter une situation de risque par un objet en recalculant les données du capteur après détection d'une déformation sur la lentille optique.

9. Procédé pour système de détection et d'information d'un risque automobile selon la revendication 3, dans lequel le logiciel pour une rotation d'image recalcule des données d'au moins un capteur ou groupe de capteurs qui sont affichées sous la forme d'une image de vue à vol d'oiseau.

10. Procédé pour système de détection et d'information d'un risque automobile selon la revendication 1, dans lequel le logiciel démarre une indication pour le conducteur, dans lequel l'indication est un signal optique ou acoustique ou tactile.

11. Procédé pour système de détection et d'information d'un risque automobile selon la revendication 1 qui comprend au moins une interface avec le système de bus interne du véhicule.

12. Procédé pour système de détection et d'information d'un risque automobile selon la revendication 11 dans lequel le logiciel influence des paramètres du véhicule par l'intermédiaire du système de bus.
